# EUROPEAN PATENT APPLICATION

(11) **EP 0 994 615 A1**
(43) Date of publication of application: **19.04.2000**
(21) Application number: 98119266.9
(22) Date of filing: 13.10.1998
(51) Int. Cl.: H04M 1/72

(54) **Mobile Telephone**

(71) Applicant: ROBERT BOSCH GMBH, 70442 Stuttgart (DE)
(72) Inventor: Pedersen, Jens Erik, 9000 Alborg (DK)

(57) **Abstract**

The invention relates to a mobile telephone comprising a text memory to store text data. Further the telephone comprises a text-to-speech converter capable to receive the text data and converting that text data into speech signals.

## Description

### State of the Art

The inventions relates to a mobile telephone comprising a memory to store text data. There are already mobile telephones known that operate according to a GSM-standard that comprise a memory to store text data of a short message service or a telephone book.

### Advantages of the invention.

The invention according to the features of the independent patent claim have the advantage, that the user must not read the text data on the display, but can listen to the text data which are converted to ordinary speech. This allows the user to use the text data even in situations where it is not possible to read a display, for example while driving a car. Since mobile telephones become smaller and smaller, it becomes also more difficult to read the data that are shown on the display.

The dependent patent claims comprise features that allow further useful improvements. The text-to-speech converter is especially useful to listen to text data transmitted over the wireless interface (in GSM: short message service). Further the user can listen to the entries of a telephone book or to the different commands of a menu. By combining that text-to-speech converter with a speech-to-text converter it is also possible to generate text data simply by speaking to the mobile telephone. This allows the sending of text data simply by speaking to the mobile telephone. Further it is possible to operate the mobile telephone by listening to the different possible commands of a menu and excepting one of the menu commands by a simple command. For this purpose very simple speech-to-text converter can be used.

### Drawings

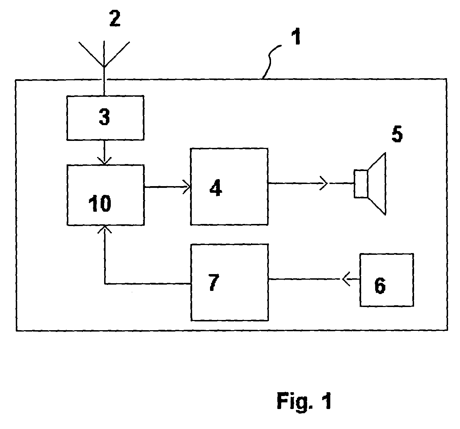

The invention is shown in the drawings and described in detail in the following description. Figure 1 shows a block diagram of a mobile telephone.

### Description

Figure 1 shows a blockdiagram of a mobile telephone 1. The mobile telephone 1 comprises an antenna 2 that is connected to a data processing unit 3. The data processing unit 3 is capable to receive and send telephone signals, for example telephone signals according to the GSM-Standard, via the antenna 2. The data processing unit 3 is connected to a text-memory 10. The text-memory 10 is capable to transmit text data to a text-to-speech converter 4 that is connected to a loudspeaker 5. Further the mobile telephone 1 comprises a microphone 6 that is used to transmit speech signals to a speech-to-text converter 7. The speech-to-text converter 7 is capable to store the text data into the text-memory 10.

The data processor unit 3 comprises all functions of a normal mobile telephone. For the sacke of simplicity no details are shown. Further the data processing unit 3 comprises a microprocessor to control the operation of the text-memory 10, the text-to-speech converter 4 or the speech-to-text converter 7. As an example it is assumed for the further description of the invention that the data processing unit 3 is a mobile telephone unit operating according to the GSM-standard. The data processing unit 3 is therefore capable to receive and send data via the antenna 2. Further the data processing unit 3 is capable to receive data from the microphone 6 and to send data to the loudspeaker 5. The necessary connections to the loudspeaker 5 and microphone 6 are not shown for the reason of simplicity.

Within the GSM-standard it is possible to send text data via the so called short message service" . The data processing unit 3 is capable to receive these data and to store these data in the text-memory 10. The text memory 10 is here shown as a separate memory but it can also be a memory that is within the data processing unit 3 and may also be used for other data storing purposes. To facilitate the description of the invention the text-memory 10 is here shown as a separate element. The text-memory is connected to a text-to-speech converter 4 or a speech-to-text converter 7. When text data from the text-memory 10 has transferred to the text-to-speech converter 4 the text-to-speech converter 4 generates a speech signal that is given to the loudspeaker 5. With the microphone 6 receives speech data that are then transferred to the speech-to-text converter 7. The speech-to-text converter 7 generates text data that are then stored in the text-memory 10. Speech-to-text converters 7 are also known as speechrecognion systems. Text-to-speech converters are also known as speech synthesizers.

The mobile telephone as shown in Figure 1 allows several useful operation method.

The first operation method only uses the text memory 10 and the text-to-speech converter 4 to allow the user to hear text messages that where received via short message servers. This method is especially useful as the mobile telephones become smaller and it therefore becomes more difficult to read the data displayed on the display. Further the mobile telephone might be used in a surrounding where it is not possible to read data on a display for example if mobile telephone is used while driving a car. Further the text-memory 10 can also contain a telephone book. Instead of reading the telephone book entries on a display, the names of the people can be transferred to the text-to-speech converter 4 and the user can then hear the name of the people that are in this telephone book. If the user hears the name of the person who he wants to reach, he gives a command, for example by pushing a button, and the mobile telephone 1 dials the telephone number for that person. So very useful applications can be made only by using the text-memory 10 and the text-to-speech converter 4 alone.

Further useful application are possible by using the speech-to-text converter 7. The speech-to-text converter 7 can be used to generate text messages that are then send via the short message service of the GSM-system. Further the speech-to-text converter 7 can be used to store a name and a telephone number in a telephone book. This is much more convenient than using the normal 10 digit telephone keyboard to input text data. This application is especially with decreasing size of the mobile telephone, because the smaller the buttons become, the more complicate it will be to use them. So the speech-to-text converter 7 is a very useful device in a mobil phone, even when used without a text-to-speech converter 4.

Very useful applications are possible if the mobile telephone comprises a text-to-speech converter 4 and a speech-to-text converter 7. When the mobile telephone is activated the text-to-speech converter 4 is used to tell the user what services are available. This is equivalent to displaying a menu of possible functions on a display. The speech-to-text converter 7 can then be used to select one of the possible functions. An example: The user wants to reach home but does not know the telefone number. After activation the mobile telephone 1 tells the user that the function " menu" or the function " telephone call" are available. The user then selects the function " menu" by a spoken command. The mobile telephone then tells the user what menu functions are available: 1. emergency call, 2. phone book, 3. short message service and so on. The user can then select one of the possible menu items by a spoken command. If the speech-to-text converter 7 is a sophisticated device and can understand any spoken command the user might activate a specific menu topic by naming it: " phone book" . If the speech-to-text converter is not so sophisticated it might only be able to understand the command yes or no and the numbers one to 10. The user can activated the menue topic by saying the number of a menu topic:" 2" (= phone book).

With an other methode the user can select one of the menu items by saying " yes" or " no" after he heard the menu topic from the text-to-speech converter 4. The telephone asks "Do you want to make an emergency call?" and the user answers "No". The telephone then asks "Do you want the telephone book?" and the user answers "Yes". The mobile telephone starts then to read the telephone book entries whereby the telephone book entries are listed in alphabetic order or in dependence how often a telephone number was called. When the mobile telephone 1 asks "Do you want to telephone home?" the user says "Yes" and the mobile telephone dials then the home telephone number. When using a text-to-speech converter 4 in kombination with a speech-to-text converter it is therefore possible to use a very simple speech-to-text converter 7 to operate the mobile telephone.

## Claims

1. Mobile telephone comprising a text-memory (10) to store text data, characterized by, a text-to-speech converter (4) capable to receive text data from that text-memory (10) and converting the text data to speech signals.

2. Mobile telephone according to claim 1, characterized by, a data processing unit (3) that is capable to receive data from an antenna (2) and converts that data into text data and storing that text data in that that text memory (10).

3. Mobile telephone according to one of preceding claims, characterized by, that text data in that text memory (10) are entries in a user telephone book.

4. Mobile telephone according to one of preceding claims, characterized by, that text data in that text memory (10) are commands of a menu to operate the telephone.

5. Mobile telephone to claim 1, characterized by, a speech-to-text converter (7) capable to receive a speech data, converting the speech data to text data and storing the text data in that text memory (10).
